# EUROPÄISCHE PATENTSCHRIFT

(11) **EP 2 619 823 B1**
(45) Veröffentlichungstag und Bekanntmachung des Hinweises auf die Patenterteilung: **26.02.2020**
(21) Anmeldenummer: 11745703.6
(22) Anmeldetag: 13.08.2011
(51) Int. Cl.: H01M 2/10

(54) **RAHMENSYSTEM FÜR BATTERIEZELLEN SOWIE BATTERIEMODUL**
RACK SYSTEM FOR BATTERY CELLS AND BATTERY MODULE
SYSTÈME DE CADRE POUR ÉLÉMENTS DE BATTERIE ET MODULE DE BATTERIE

(30) Priorität: 24.09.2010 DE 102010046529
(43) Veröffentlichungstag der Anmeldung: 31.07.2013
(73) Patentinhaber: Volkswagen Aktiengesellschaft, 38440 Wolfsburg (DE)
(72) Erfinder: GIERE, Peter, 31234 Edemissen (DE)
(86) Internationale Anmeldenummer: PCT/EP2011/004084
(87) Internationale Veröffentlichungsnummer: WO 2012/038008

(56) Entgegenhaltungen:
- EP-A1- 0 952 620
- WO-A2-2007/079449
- US-A1- 2010 136 461
- US-A1- 2010 167 115

## Beschreibung

Die vorliegende Erfindung betrifft ein viereckiges Rahmensystem, das zur Aufnahme wenigstens einer Batteriezelle ausgebildet ist, wobei das Rahmensystem eine erste und eine zweite Druckplatte, die zwei sich gegenüberliegende Seiten des Rahmensystems bilden, und ein erstens und ein zweites Seitenteil, die die zwischen den beiden Druckplatten befindlichen weiteren zwei Seiten des Rahmensystems bilden, aufweist, und wobei die jeweiligen Seitenteile im Bereich der Ecken des Rahmensystems an den Druckplatten befestigt sind. Des Weiteren betrifft die Erfindung ein Batteriemodul, das ein viereckiges Rahmensystem und wenigstens eine Batteriezelle, die vom viereckigen Rahmensystem umfasst ist, aufweist.

Eine Batteriezelle, zum Beispiel eine Lithiumzelle, weist typische Betriebsspannungen im einstelligen Voltbereich, insbesondere zwischen 2,5 und 5 Volt, auf. Für den Betrieb von Fahrzeugen werden jedoch höhere Spannungen benötigt. Für Hochvoltbatteriesysteme von Fahrzeugen werden deshalb Einzelzellen zu Modulen zusammengefasst und in Reihe geschaltet, um ein für das Antriebskonzept geeignetes Spannungsniveau zu erreichen. Insbesondere prismatische, beispielsweise quaderförmige, Lithiumzellen neigen dazu, in Abhängigkeit des Ladezustandes, der Temperatur und der Alterung einen Zellbauch auszubilden. Bei Batteriezellen, insbesondere bei nebeneinander angeordneten Batteriezellen eines Batteriemoduls, führt dies zu einer Längenausdehnung, die einen größeren Bauraum beansprucht. Auch wird die Leistung und die Lebensdauer der Batteriezellen durch die Bildung des Zellbauchs negativ beeinflusst.

Um Batteriemodule zu kompaktieren, das heißt eine Längenausdehnung aufgrund der Zellbäuche zu verhindern, ist bekannt, Batteriemodule mit einem Rahmen zu versehen. So wird in der EP 0 732 759 B1 ein Batteriemodul offenbart, das einen Rahmen aufweist. Dieser Rahmen besteht aus zwei Endplatten und mehreren die Endplatten verbindenden Verbindungselementen in bandartiger Struktur. Die Endplatten weisen dabei einen rechteckigen flachen Plattenabschnitt auf, der an den jeweils äußersten Batteriezellen des Batteriemoduls anliegt und einen rechteckigen Rahmenabschnitt, der von den vier Seiten des flachen Plattenabschnitts durchgehend hochsteht. Die Verbindungselemente sind dabei mit dem rechteckigen Rahmenabschnitt der Endplatte verbunden. Zur Befestigung der Verbindungselemente an dem Außenseiten des rechteckigen Rahmenabschnitts sind Löcher an den Enden der Verbindungselemente vorgesehen, die senkrecht zu der Längserstreckung der Verbindungselement verlaufen. Zur Fixierung der Verbindungselemente mit dem rechteckigen Rahmenabschnitt werden Bolzen durch die Löcher der Verbindungselemente eingesteckt und in entsprechend fluchtend zu den Löchern der Verbindungselemente angeordnete Löcher in dem rechteckigen Rahmenabschnitt der Endplatten hindurchgeführt. Die Verbindung erfolgt somit senkrecht zu einer möglichen Ausdehnung des Batteriemoduls durch die Ausbildung von Zellbäuchen. Dies führt zu Scherkräften an den Verbindungsstellen, insbesondere in den Wandungen der Löcher oder in den Bolzen, die die Verbindung zerstören können. Desweiteren geht aus der EP 0 732 759 B1 hervor, dass die Seiten der Endplatte mit mehreren, insbesondere zwei oder mehr, bandartigen Verbindungselementen verbunden wird. Bei einer äußeren Krafteinwirkung, zum Beispiel bei einem Verkehrsunfall, kann sich der Rahmen verwinden, die Integrität des Batteriemoduls kann dabei verloren gehen.

US 2010/167115 A1 offenbart ein Batteriesystem aufweisend einen Batterieblock mit einer Vielzahl von Batteriezellen, wobei die Batteriezellen in einem viereckigen Rahmensystem gehalten werden.

US 2010/0136461 A1 offenbart ein Energiespeichergerät in Form eines Batteriesystems, das in einem Batteriehalter angeordnet ist.

WO 2007/079449 A2 offenbart ein Batteriesystem umfassend eine Vielzahl von Batteriezellen, die von einem Rahmensystem umgeben werden.

Aufgabe der Erfindung ist es, ein einfaches viereckiges Rahmensystem der eingangs beschriebenen Art zur Aufnahme wenigstens einer Batteriezelle zu schaffen, bei dem die Befestigungsbereiche beziehungsweise Befestigungspunkte zwischen den Druckplatten und den Seitenteile entlastet werden und das eine hohe Sicherheit bei äußerer Krafteinwirkung bietet.

Diese Aufgabe wird erfindungsgemäß durch ein viereckiges Rahmensystem zur Aufnahme wenigstens einer Batteriezelle mit den Merkmalen gemäß dem unabhängigen Patentanspruch 1 der Patentanmeldung gelöst. Ferner wird die Aufgabe durch ein Batteriemodul gemäß Patentanspruch 9 gelöst. Weitere Merkmale und Details der Erfindung ergeben sich aus den Unteransprüchen, den Figuren und der Beschreibung. Merkmale und Details, die in Zusammenhang mit dem viereckigen Rahmensystem beschrieben sind, gelten dabei selbstverständlich auch im Zusammenhang mit dem Batteriemodul, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein viereckiges Rahmensystem zur Aufnahme wenigstens einer Batteriezelle gelöst. Das viereckige Rahmensystem besteht dabei aus einer ersten und einer zweiten Druckplatte, die zwei sich gegenüberliegende Seiten des Rahmensystems bilden. Die Druckplatten werden dabei an dem Bereich der Batteriezelle oder dem Stapel von Batteriezellen angeordnet, an dem die Ausbildung eines Zellbauchs verhindert werden soll. Ferner weist das viereckige Rahmensystem ein erstes und ein zweites Seitenteil auf, die die zwischen den beiden Druckplatten befindlichen weiteren zwei Seiten des Rahmensystems bilden. Die Seitenteile sind im Bereich der Ecken des Rahmensystems an den Druckplatten befestigt. An den den Druckplatten zugewandten Enden jedes Seitenteils sind Laschen angekantet, die derart ausgestaltet sind, dass sie die Druckplatten formschlüssig entlang der vollen Breite der Druckplatten hintergreifen. Dabei kann vorgesehen sein, dass die Laschen durch eine Verformung, insbesondere ein Biegen, der Seitenteile erzeugt sind. Im zusammengebauten Zustand des viereckigen Rahmensystems liegen die Laschen an den Seiten der Druckplatten an, die dem Inneren des Rahmensystems abgewandt sind. Durch das Anliegen an den Außenseiten der Druckplatten sind die Laschen an den Druckplatten formschlüssig befestigt. Durch das flächige Anliegen der Laschen auf den Außenseiten der Druckplatten wird, im Falle der Ausbildung eines Zellbauches bei der wenigstens einen Batteriezelle, die Zuglast über die Laschen direkt in die Seitenteile geleitet. Damit wird eine entscheidende Entlastung der Befestigungsbereiche beziehungsweise Befestigungspunkte erreicht, da die Zugkraft der Seitenteile nicht direkt als Scherkraft an diesen anliegt. Durch den Formschluss der Laschen und der Seitenteile mit den Druckplatten beziehungsweise das Hintergreifen der Druckplatten durch die Laschen der Seitenteile wird zudem die Verbindungssteifigkeit des viereckigen Rahmensystems erhöht. Insbesondere kann dadurch ein erhöhter Schutz gegen externe Krafteinwirkung bei einem Unfall hergestellt werden. Durch die spezielle Ausgestaltung der Seitenteile und die Befestigung der Seitenteile an den Außenseiten der Druckplatten sind ein hoher Vordruck und eine hohe Haltekraft gewährleistet. Die Druckplatten können bei Aufbauchung der Batteriezellen auf Biegung beansprucht werden und leiten dadurch Zugkräfte in die Seitenteile des viereckigen Rahmensystems ein. Die mit der speziellen Fixierung der Seitenteile an die Druckplatten verbundene Aussteifung der Seitenteile beziehungsweise der Druckplatten gewährleistet eine hohe Abstützung in Querrichtung. Ein derartig ausgebildetes viereckiges Rahmensystem ist kompakt und modular ausgebildet, so dass dieses universell im jeweilig zur Verfügung stehenden Bauraum, auch in mehreren Ebenen, sicher verbaubar ist. Das Zusammenhalten der Seitenteile und der Druckplatten des viereckigen Rahmensystems kann allein durch die auftretenden Druck- und Zugkräfte bei einer Umhüllung wenigstens einer Batteriezelle erfolgen.

In einer besonders bevorzugten Ausgestaltung der Erfindung ist das viereckige Rahmensystem als rechteckiges Rahmensystem ausgebildet. Bei dieser Ausgestaltung sind die Laschen senkrecht an die Seitenteile angekantet. Die Übertragung der Zuglast von den Druckplatten auf die Seitenteile ist in dieser Ausgestaltung besonders gut möglich. Das rechteckige Rahmensystem für eine oder mehrere Batteriezellen ist somit besonders stabil.

Gemäß einer weiteren bevorzugten Ausgestaltung der Erfindung weisen die Laschen der Seitenteile des viereckigen Rahmensystems jeweils wenigstens eine Aussparung und die Druckplatten Aufnahmen auf. Die Aussparungen und die Aufnahmen sind dabei jeweils paarweise zueinander fluchtend angeordnet. Dies erlaubt, dass ein Befestigungselement durch eine Aussparung einer Lasche in die jeweils fluchtend angeordnete Aufnahme an der Druckplatte eingreifen kann. Jede Lasche wird über die vorgesehenen Befestigungselemente an einer Druckplatte, insbesondere an der dem Inneren des Rahmensystems abgewandten Seite einer Druckplatte, befestigt und dadurch die Seitenteile sicher an den Druckplatten fixiert. Als Befestigungselemente können Schrauben, Nieten und/oder Steckstifte vorgesehen sein. Durch diese zusätzliche Befestigung wird eine besonders stabile Verbindung zwischen den Seitenteilen und der Druckplatte hergestellt.

In einer besonders bevorzugten Weiterentwicklung der Erfindung kann bei dem viereckigen Rahmensystem vorgesehen sein, dass die Aussparungen in den Laschen als Durchgangsbohrung und/oder die Aufnahmen der Druckplatten als Vertiefungen ausgebildet sind. Dabei können die Vertiefungen in den Druckplatten als Sacklochbohrungen und/oder Steckaufnahmen ausgebildet sein. In dieser Ausfertigung der Erfindung ist sichergestellt, dass die Befestigungselemente durch die Laschen in die Aufnahmen der Druckplatten eingreifen, die Befestigungselemente jedoch nicht durch die Druckplatten in das Inneren des viereckigen Rahmensystems hindurchgeführt werden. Ein Einwirken des Befestigungselements auf die anliegende Batteriezelle, insbesondere ein Zerstören der Außenhülle der Batteriezelle, kann dadurch wirksam vermieden werden.

Gemäß einer weiteren bevorzugten Weiterentwicklung der Erfindung kann bei dem viereckigen Rahmensystem vorgesehen sein, dass die Aussparungen in den Laschen und/oder die Aufnahmen der Druckplatten ein Innengewinde zur Aufnahme von Befestigungsschrauben aufweisen. Durch das Einschrauben von Befestigungsschrauben in die Aussparungen der Laschen und die Aufnahmen der Druckplatten können die Befestigungsschrauben in diesen besonders sicher fixiert werden. Ein Herausfallen, wie es bei einfachen Metallstiften möglich wäre, kann so gänzlich ausgeschlossen werden.

Ferner ist vorzugsweise vorgesehen, dass das viereckige Rahmensystem Druckplatten und/oder Seitenteile aufweist, die als Strangpressprofil ausgebildet sind. Bei dieser Herstellungsart wird ein metallischer Werkstoff, der auf Umformtemperatur erwärmt wurde, durch eine Matrize gedrückt. Profile auch in komplizierten Formen, insbesondere mit Hohlräumen, können so in einem Verfahrensschritt monolithisch bei geringem Kostenaufwand schnell hergestellt werden.

Eine besonders bevorzugte Ausgestaltung der Erfindung sieht vor, dass die erste und die zweite Druckplatte des viereckigen Rahmensystems identisch ausgebildet sein können. Ferner können auch das erste und das zweite Seitenteil des viereckigen Rahmensystems identisch ausgebildet sein. Die identische Ausbildung der Bauteile des viereckigen Rahmensystems erlauben eine Reduzierung der Herstellungskosten, da die Notwendigkeit für verschiedene Herstellungsverfahren und/oder Werkzeugformen für die jeweils ersten beziehungsweise zweiten Bauteile entfällt. Die Herstellungskosten werden dadurch gesenkt. Es wird ebenso die Montagefreundlichkeit des Rahmensystems erhöht, da bei der Verwendung von identischen Bauteilen eine Verwechslung nicht möglich ist.

Ferner kann bei dem viereckigen Rahmensystem vorgesehen sein, dass an den Druckplatten und/oder an den Seitenteilen des viereckigen Rahmensystems Aussteifungselemente vorgesehen sind. Diese Aussteifungselemente können zum Beispiel als Rillen in den Seitenteilen realisiert sein. Durch diese Aussteifungselemente wird insbesondere die Verdrehsteifigkeit und die Verbindungssteifigkeit de Bauteile erhöht. Dies erhöht im Falle einer externen Krafteinwirkung die Sicherheit des viereckigen Rahmensystems, zum Beispiel im Falle eines Unfalls.

Besonders bevorzugt ist ein viereckiges Rahmensystem, bei dem die Laschen eines Seitenteils mit diesem einstückig sind, insbesondere monolithisch mit diesem ausgebildet sind. Durch die monolithische Ausfertigung wird eine sonst notwendige Befestigung der Laschen an den Seitenteilen vermieden. Dies macht die Fertigung einfacher und weniger kostenintensiv. Insbesondere können die Seitenteile inklusive der Laschen durch Eingießen eines Gussmaterials in ein vorgefertigtes Gusswerkzeug in einem einzigen Herstellungsvorgang erzeugt werden.
Erfindungsgemäß weisen die Seitenteile des viereckigen Rahmensystems an den längsseitigen Ober- und/oder Unterkanten zum Inneren des Rahmensystems gerichtete Laschen auf. Mit diesen zusätzlichen Laschen, die in ihrer Quererstreckung vorzugsweise senkrecht zu den die Druckplatten hintergreifenden Laschen verlaufen, kann die wenigstens eine Batteriezelle auf der Ober- und/oder Unterseite formschlüssig umgriffen werden. Eine zusätzliche Stabilisierung der Batteriezelle(n) ist somit möglich.

Ferner kann in einer weiteren Ausgestaltung der Erfindung vorgesehen sein, dass das viereckige Rahmensystem eine Bodenplatte oder eine Kühlplatte aufweist. Durch eine Bodenplatte wird das Rahmensystem zusätzlich verstärkt und versteift. Dadurch wird die Sicherheit im Unfallfall erhöht. Besonders bevorzugt ist die Bodenplatte als Kühlplatte ausgebildet, um überflüssige Wärme, die beim Betrieb der Batteriezellen erzeugt wird, von den Batteriezellen wegzuleiten. Die thermische Belastung der Batteriezellen wird so erniedrigt, die Leistungsfähigkeit und Lebensdauer der Batteriezellen erhöht.

Gemäß eines zweiten Aspektes der Erfindung wird die Aufgabe durch ein Batteriemodul mit einem viereckigen Rahmensystem und wenigstens einer Batteriezelle gelöst, wobei das viereckige Rahmensystem gemäß wenigstens einer Ausführungsvariante des ersten Aspektes der Erfindung ausgebildet ist. Durch die Verwendung eines erfindungsgemäßen Rahmensystems zur Aufnahme beziehungsweise Umrahmung wenigstens einer Batteriezelle wird verhindert, dass die wenigstens eine Batteriezelle einen Zellbauch ausbildet. Dadurch wird die Leistung und die Lebensdauer der Batteriezelle(n) erhöht. Desweiteren wird durch die erfindungsgemäße Ausgestaltung des Rahmensystems die Sicherheit bei äußerer Krafteinwirkung, zum Beispiel im Falle eines Unfalls, deutlich erhöht. Durch die Verwendung eines erfindungsgemäßen Rahmensystems werden ferner die Herstellungskosten des Batteriemoduls gesenkt und die Montage des Batteriemoduls erleichtert.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1:: in einer perspektivischen Ansicht ein viereckiges Rahmensystem, das nach dem erfindungsgemäßen Konstruktionsprinzip ausgebildet ist,
- Figur 2:: in einer perspektivischen Ansicht ein Batteriemodul mit Batteriezellen und einem viereckiges Rahmensystem, das nach dem erfindungsgemäßen Konstruktionsprinzip ausgebildet ist.

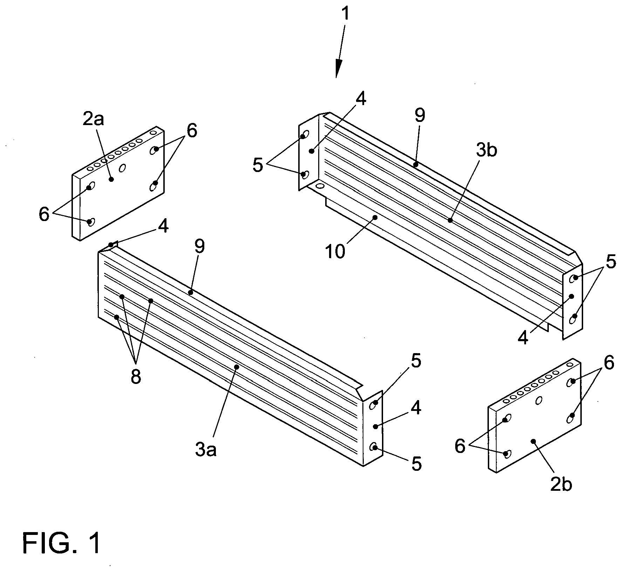

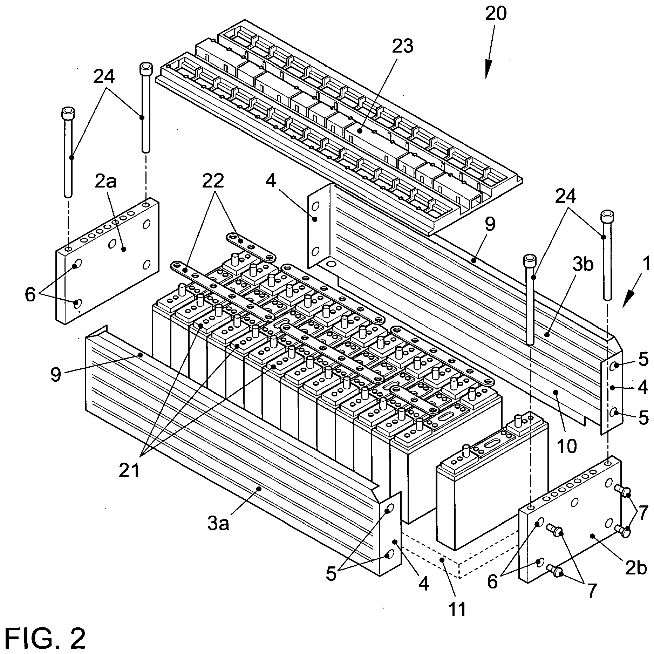

Elemente mit gleicher Funktion und Wirkungsweise sind in den Figuren 1 und 2 jeweils mit denselben Bezugszeichen versehen.

Die Fig. 1 zeigt in einer perspektivischen schematischen Darstellung die Einzelteile des viereckigen Rahmensystems 1. Deutlich zu erkennen sind dabei die erste und die zweite Druckplatte 2a, 2b und das erste und das zweite Seitenteil 3a, 3b. Die Druckplatten 2a, 2b und die Seitenteile 3a, 3b sind dabei jeweils identisch ausgebildet. Ferner bildet jedes der vier Bauteile 2a, 2b, 3a, 3b jeweils ein monolithisches Bauteil. An den den Druckplatten 2a, 2b zugewandten Enden der Seitenteile 3a, 3b ist jeweils eine Lasche 4 angekantet. In dieser Ausführungsform des viereckigen Rahmensystems 1 sind die Laschen 4 durch eine Biegeumformung angekantet. In den Laschen 4 sind Aussparungen 5 vorgesehen. Diese sind im zusammengebauten Zustand des viereckigen Rahmensystems 1 fluchtend zu den Aufnahmen 6 in den Druckplatten 2 angeordnet. Dies ermöglicht eine Verbindung der Laschen 4 der Seitenteile 3 mit den Druckplatten 2 über nicht dargestellte Verbindungselemente. Die Laschen 4 werden dabei so angeordnet, dass sie an der der Innenseite des viereckigen Rahmensystems 1 abgewandten Seite der Druckplatten 2a, 2b an diesen zu liegen kommen. An den Seitenteilen 3a, 3b sind Ausschweifungselemente 8 angebracht. In der gezeigten Ausführungsform des viereckigen Rahmensystems 1 sind die Aussteifungselemente 8 als Rillen ausgeführt. Diese dienen einer zusätzlichen Versteifung der Seitenteile 3a, 3b. An die Seitenteile 3a, 3b sind an deren Oberseiten obere Laschen 9 angekantet. Sie dienen zum Umgreifen der Oberseiten von Batteriezellen. Ein Herausfallen von Batteriezellen aus dem viereckigen Rahmensystem 1 ist somit nicht möglich. Desweiteren sind an den unteren Kanten der Seitenteile 3a, 3b untere Laschen 10 angekantet. Diese unteren Laschen 10 dienen zum Umfassen der Unterseiten von Batteriezellen 21. Ein Herausfallen von Batteriezellen nach unten aus dem viereckigen Rahmensystem 1 kann somit ebenfalls vermieden werden.

In der Fig. 2 ist ein Batteriemodul 20 in einer schematischen perspektivischen Explosionsansicht gezeigt, das ein, wie in Fig. 1 beschriebenes, viereckiges Rahmensystem 1 aufweist. Zusätzlich zu den Druckplatten 2a, 2b und den Seitenteilen 3a, 3b bilden Batteriezellen 21 den Hauptteil des Batteriemoduls 20. Die Batteriezellen 21 sind dabei hintereinander auf einer Bodenplatte 11 des viereckigen Rahmensystems 1 angeordnet. Die elektrischen Kontakte der Batteriezellen 21 werden mit Polverbindern 22 miteinander verbunden. Zur Abdeckung der Oberseite der Batteriezellen 21 dient eine Kontaktplatte 23. Im zusammengebauten Zustand liegen die Druckplatten 2a, 2b an den ihnen zugewandten Seiten der ersten und der letzten Batteriezelle 21 an. Die Seitenteile 3a, 3b liegen an den ihnen zugewandten Seiten der Batteriezellen 21 an. Die oberen Laschen 9 der Seitenteile 3a, 3b können dabei zusätzlich die Kontaktplatte 23 formschlüssig umfassen. Die unteren Laschen 10 der Seitenteile 3a, 3b umfassen vorteilhafterweise formschlüssig die Bodenplatte 11 des Batteriemoduls 20. Die Laschen 4 der Seitenteile 3a, 3b sind derart an den der Innenseite des viereckigen Rahmensystems 1 abgewandten Seite der Druckplatte 2a, 2b angeordnet, dass die Aussparungen 5 in den Laschen 4 und die Aufnahmen 6 in den Druckplatten 2a, 2b jeweils paarweise fluchtend sind. Dadurch ist es möglich, dass die Befestigungselemente 7 die Verbindung zwischen den Laschen 4 und den Druckplatten 2a, 2b besonders gut fixieren können. Über Befestigungsbolzen 24 kann das gesamte zusammengebaute Batteriemodul 20 in seinem Bestimmungsort, etwa einem Fahrzeug, befestigt werden. Durch die Verbindung der Druckplatten 2a, 2b mit den Seitenteilen 3a, 3b über die Laschen 4 wird die Zuglast durch eventuell entstehende Zellbäuche der Batteriezellen 21 über den Formschluss der Laschen 4 von den Druckplatten 2a, 2b in die Seitenteile 3a, 3b übertragen. Eine zusätzliche Belastung durch Scherkräfte an den Befestigungselementen 7 tritt dabei nicht auf. Durch die identische Ausführung sowohl des ersten Seitenteils 3a als auch des zweiten Seitenteils 3b sowie beider Druckplatten 2a, 2b kann das viereckige Rahmensystem 1 kostengünstig hergestellt werden. Durch die Vermeidung von Verwechslung bei verschiedenartigen Seitenteilen 3a, 3b beziehungsweise Druckplatten 2a, 2b wird die Montagefreundlichkeit des viereckigen Rahmensystems 1 erhöht. Durch die formschlüssige Umfassung der Kontaktplatte 23 durch die oberen Laschen 9 beziehungsweise der Bodenplatte 11 durch die unteren Laschen 10 ergibt sich eine stabile und sichere Konstruktion des Batteriemoduls 20. Ausschweifungselemente 8 in den Seitenteilen 3a, 3b erhöhen zusätzlich die Verwindungssteifigkeit des gesamten Batteriemoduls 20. Ein derart gestaltetes Batteriemodul 20 weist daher eine erhöhte Sicherheit bei äußerer Krafteinwirkung, insbesondere bei Unfällen, auf.

Durch das flächige Anliegen der Laschen 4 auf den Außenseiten der Druckplatten 2a, 2b wird, im Falle der Ausbildung eines Zellbauches bei den Batteriezellen 21, die Zuglast über die Laschen 4 direkt in die Seitenteile 3a, 3b des viereckigen Rahmensystems 1 geleitet. Damit wird eine entscheidende Entlastung der Befestigungsbereiche beziehungsweise Befestigungspunkte erreicht, da die Zugkraft der Seitenteile 3a, 3b nicht direkt als Scherkraft an diesen anliegt. Durch den Formschluss der Laschen 4 und der Seitenteile 3a, 3b mit den Druckplatten 2a, 2b beziehungsweise das Hintergreifen der Druckplatten 2a, 2b durch die Laschen 4 der Seitenteile 3a, 3b wird zudem die Verbindungssteifigkeit des viereckigen Rahmensystems 1 erhöht. Insbesondere kann dadurch ein erhöhter Schutz gegen externe Krafteinwirkung bei einem Unfall hergestellt werden. Durch die spezielle Ausgestaltung der Seitenteile 3a, 3b und die Befestigung der Seitenteile 3a, 3b an den Außenseiten der Druckplatten 2a, 2b sind ein hoher Vordruck und eine hohe Haltekraft gewährleistet. Die Druckplatten 2a, 2b können bei Aufbauchung der Batteriezellen 21 auf Biegung beansprucht werden und leiten dadurch Zugkräfte in die Seitenteile 3a, 3b des viereckigen Rahmensystems 1 ein. Die mit der speziellen Fixierung der Seitenteile 3a, 3b an die Druckplatten 2a, 2b verbundene Aussteifung der Seitenteile 3a, 3b beziehungsweise der Druckplatten 2a, 2b gewährleistet eine hohe Abstützung in Querrichtung. Ein derartig ausgebildetes viereckiges Rahmensystem 1 ist kompakt und modular ausgebildet, so dass dieses universell im jeweilig zur Verfügung stehenden Bauraum, auch in mehreren Ebenen, sicher verbaubar ist.

### Bezugszeichenliste

- 1: viereckiges Rahmensystem
- 2a: erste Druckplatte
- 2b: zweite Druckplatte
- 3a: erstes Seitenteil
- 3b: zweites Seitenteil
- 4: Lasche
- 5: Aussparung in Lasche
- 6: Aufnahme in Druckplatte
- 7: Befestigungselement
- 8: Aussteifungselement
- 9: untere Lasche
- 10: obere Lasche
- 11: Bodenplatte
- 20: Batteriemodul
- 21: Batteriezellen
- 22: Polverbinder
- 23: Kontaktplatte
- 24: Befestigungsbolzen

## Patentansprüche

1. Viereckiges Rahmensystem (1) zur Aufnahme wenigstens einer Batteriezelle (20), aufweisend eine erste und eine zweite Druckplatte (2a, 2b), die zwei sich gegenüberliegende Seiten des Rahmensystems (1) bilden, aufweisend ein erstes und zweites Seitenteil (3a, 3b), die die zwischen den beiden Druckplatten (2a, 2b) befindlichen weiteren zwei Seiten des Rahmensystems (1) bilden, wobei die jeweiligen Seitenteile (3a, 3b) im Bereich der Ecken des Rahmensystems (1) an den Druckplatten (2a, 2b) befestigt sind, wobei an den Druckplatten (2a, 2b) zugewandten Enden jedes Seitenteils (3a, 3b) Laschen (4) angekantet sind, die die Druckplatten (2a, 2b) formschlüssig hintergreifen, so dass die Laschen (4) an den jeweiligen, dem Inneren des Rahmensystems (1) abgewandten, Druckplattenseiten der Druckplatten (2a, 2b) anliegen, und dass die Laschen (4) an den jeweiligen Druckplatten (2a, 2b) formschlüssig befestigt sind, wobei an den längsseitigen Ober- und/oder Unterkanten der Seitenteile (3a, 3b) zum Inneren des Rahmensystems (1) gerichtete Laschen (9, 10) vorgesehen sind,
**dadurch gekennzeichnet, dass** die Laschen (4) derart ausgebildet sind, dass die Laschen (4) die Druckplatten (2a, 2b) entlang der vollen Breite der Druckplatten (2a, 2b) formschlüssig hintergreifen, wobei durch das Anliegen an den Außenseiten der Druckplatten (2a, 2b) die Laschen (4) an den Druckplatten (2a, 2b) formschlüssig befestigt sind, wobei durch das flächige Anliegen der Laschen (4) auf den Außenseiten der Druckplatten (2a, 2b), im Falle der Ausbildung eines Zellbauches bei der wenigstens einen Batteriezelle (20), eine Zuglast über die Laschen (4) direkt in die Seitenteile (3a, 3b) geleitet wird.

2. Viereckiges Rahmensystem (1) nach Anspruch 1, **dadurch gekennzeichnet, dass** jede Laschen (4) wenigstens eine Aussparung (5) aufweist, dass die Druckplatten (2a, 2b) Aufnahmen (6) aufweisen, wobei jede Aufnahme (6) fluchtend zu einer Aussparung (5) einer Lasche (4) angeordnet ist, und dass Befestigungselemente (7) vorgesehen sind, wobei jeweils ein Befestigungselement (7) durch eine Aussparung (5) einer Lasche (4) in die jeweils fluchtend angeordnete Aufnahme (6) einer Druckplatten (2a, 2b) eingreift.

3. Viereckiges Rahmensystem (1) nach Anspruch 2, **dadurch gekennzeichnet, dass** die wenigstens eine Aussparung (5) in einer Lasche (4) eine Durchgangsbohrung ist und/oder dass die Aufnahmen (6) der Druckplatten (2a, 2b) als Aussparungen oder Vertiefungen ausgebildet sind.

4. Viereckiges Rahmensystem (1) nach Anspruch 2 oder 3, **dadurch gekennzeichnet, dass** die wenigstens eine Aussparung (5) in einer Lasche (4) und/oder dass die Aufnahmen (6) der Druckplatten (2a, 2b) ein Innengewinde zur Aufnahme von Befestigungsschrauben (7) aufweist/aufweisen.

5. Viereckiges Rahmensystem (1) nach einem der Ansprüche 1 bis 4, **dadurch gekennzeichnet, dass** die Druckplatten (2a, 2b) und/oder die Seitenteile (3a, 3b) aus Strangpressprofilen ausgebildet sind.

6. Viereckiges Rahmensystem (1) nach einem der Ansprüche 1 bis 5, **dadurch gekennzeichnet, dass** an den Druckplatten (2a, 2b) und/oder den Seitenteilen (3a, 3b) Aussteifungselemente (8) vorgesehen sind.

7. Viereckiges Rahmensystem (1) nach einem der Ansprüche 1 bis 6, **dadurch gekennzeichnet, dass** die Laschen (4) eines Seitenteils (3a, 3b) einstückig, insbesondere monolithisch, mit diesem ausgebildet sind.

8. Viereckiges Rahmensystem (1) nach einem der Ansprüche 1 bis 7, **dadurch gekennzeichnet, dass** das viereckige Rahmensystem (1) eine Bodenplatte (11) oder eine Kühlplatte aufweist.

9. Batteriemodul (20), aufweisend ein viereckiges Rahmensystem (1) und wenigstens eine Batteriezelle (21), die vom viereckigen Rahmensystem (1) umfasst ist,
**dadurch gekennzeichnet,**
**dass** das viereckige Rahmensystem (1) gemäß wenigstens einem der Ansprüche 1 bis 8 ausgebildet ist.

## Claims

1. A rectangular rack system (1) for receiving at least one battery cell (20), having a first and a second pressure plate (2a, 2b) that constitute two mutually opposite sides of the rack system (1), having a first and a second side part (3a, 3b) that constitute the further two sides of the rack system (1) located between the two pressure plates (2a, 2b), wherein the respective side parts (3a, 3b) in the area of the corners of the rack system (1) are fixed to the pressure plates (2a, 2b), wherein brackets (4) are chamfered to ends facing the pressure plates (2a, 2b) of each side part (3a, 3b) that engage the pressure plates (2a, 2b) positively from behind so that the brackets (4) lie on the respective pressure plate sides of the pressure plates (2a, 2b) facing away from the interior of the rack system (1) and in that the brackets (4) are fixed positively engaged on the respective pressure plates (2a, 2b), wherein on the longitudinal upper and/or lower edges of the side parts (3a, 3b) brackets (9, 10) facing the interior of the rack system (1) are provided,
**characterized in that** the brackets (4) are so configured that the brackets (4) engage the pressure plates (2a, 2b) positively from behind along the entire width of the pressure plates (2a, 2b), wherein by lying on the outer sides of the pressure plates (2a, 2b) the brackets (4) are fixed positively engaged on the pressure plates (2a, 2b), wherein through the brackets (4) lying flat on the outer sides of the pressure plates (2a, 2b), in the event of the configuration of a cell swelling in at least the one battery cell (20), a tensile load is guided via the brackets (4) directly into the side parts (3a, 3b).

2. The rectangular rack system (1) according to claim 1, **characterized in that** each bracket (4) has at least one recess (5), **in that** the pressure plates (2a, 2b) have seats (6), wherein each seat (6) is arranged aligned on a recess (5) of a bracket (4) and **in that** fastening elements (7) are provided, wherein a respective fastening element (7) grips through a recess (5) of a bracket (4) the seat (6) respectively arranged in an aligned manner of a pressure plate (2a, 2b) .

3. The rectangular rack system (1) according to claim 2, **characterized in that** the at least one recess (5) in a bracket (4) is a through hole and/or the seats (6) of the pressure plates (2a, 2b) are configured as recesses or depressions.

4. The rectangular rack system (1) according to claim 2 or 3, **characterized in that** the at least one recess (5) in a bracket (4) and/or the seats (6) of the pressure plates (2a, 2b) has/ have an inner thread for receiving fixing screws (7).

5. The rectangular rack system (1) according to one of claims 1 to 4, **characterized in that** the pressure plates (2a, 2b) and/or the side parts (3a, 3b) are configured as extruded sections.

6. The rectangular rack system (1) according to one of claims 1 to 5, **characterized in that** on the pressure plates (2a, 2b) and/or the side parts (3a, 3b) stiffening elements (8) are provided.

7. The rectangular rack system (1) according to one of claims 1 to 6, **characterized in that** the brackets (4) of a side part (3a, 3b) are configured integrally with it, in particular monolithically.

8. The rectangular rack system (1) according to one of claims 1 to 7, **characterized in that** the rectangular rack system (1) has a base plate (11) or a cooling plate.

9. A battery module (20), having a rectangular rack system (1) and at least one battery cell (21) that is encompassed by the rectangular rack system (1), **characterized in that**
the rectangular rack system (1) is configured according to at least one of claims 1 to 8.

## Revendications

1. Système de cadre quadrangulaire (1) destiné à recevoir au moins un élément de batterie (20), comportant une première et une seconde plaque de pression (2a, 2b) formant deux côtés opposés du système de cadre (1), comportant une première et une seconde partie latérale (3a, 3b) qui forment les deux autres côtés du système de cadre (1) situés entre les deux plaques de pression (2a, 2b), les parties latérales respectives (3a, 3b) étant fixées aux plaques de pression (2a, 2b) dans la région des angles du système de cadre (1), dans lequel des languettes (4) sont pliées en correspondance des extrémités qui font face aux plaques de pression (2a, 2b) de chaque partie latérale (3a, 3b), qui s'engagent derrière les plaques de pression (2a, 2b) par engagement positif, de sorte que les languettes (4) s'appuient en correspondance des côtés des plaques de pression respectives des plaques de pression (2a, 2b) opposés à l'intérieur du système de cadre (1) et en ce que les languettes (4) sont fixées par engagement positif en correspondance des plaques de pression respectives (2a, 2b), étant prévues des languettes (9, 10) orientées en correspondance des bords supérieur et/ou inférieur longitudinaux des parties latérales (3a, 3b) vers l'intérieur du système de cadre (1), **caractérisé en ce que** les languettes (4) sont formées de telle sorte que les languettes (4) des plaques de pression (2a, 2b) s'engagent derrière le long de la largeur totale des plaques de pression (2a, 2b) et dans lequel les languettes (4) sont fixées par engagement positif aux plaques de pression (2a, 2b) en s'appuyant sur les côtés extérieurs des plaques de pression (2a, 2b), dans lequel une charge de traction est conduite par l'intermédiaire des languettes (4) directement dans les parties latérales (3a, 3b) par l'appui plat des languettes (4) sur les côtés extérieurs des plaques de pression (2a, 2b), dans le cas de la formation d'une panse d'élément dans l'au moins un élément de batterie (20).

2. Système de cadre quadrangulaire (1) selon la revendication 1, **caractérisé en ce que** chaque languette (4) comporte au moins un évidement (5), **en ce que** les plaques de pression (2a, 2b) comportent des réceptacles (6), chaque réceptacle (6) étant disposée en alignement avec un évidement (5) d'une languette (4), et **en ce que** des éléments de fixation (7) sont prévus, chaque élément de fixation (7) s'engageant à travers un évidement (5) d'une languette (4) dans le réceptacle (6) respectif agencé en alignement des plaques de pression (2a, 2b).

3. Système de cadre quadrangulaire (1) selon la revendication 2, **caractérisé en ce que** le au moins un évidement (5) dans une languette (4) est un trou traversant et/ou que les réceptacles (6) des plaques de pression (2a, 2b) sont conformés comme des évidements ou des cavités.

4. Système de cadre quadrangulaire (1) selon la revendication 2 ou 3, **caractérisé en ce qu'**au moins un évidement (5) dans une languette (4) et/ou que les réceptacles (6) des plaques de pression (2a, 2b) comporte/ent un filetage intérieur pour recevoir des vis de fixation. (7).

5. Système de cadre quadrangulaire (1) selon l'une des revendications 1 à 4, **caractérisé en ce que** les plaques de pression (2a, 2b) et/ou les parties latérales (3a, 3b) sont formées à partir de profilés extrudés.

6. Système de cadre quadrangulaire (1) selon l'une des revendications 1 à 5, **caractérisé en ce que** des éléments de renforcement (8) sont prévus sur les plaques de pression (2a, 2b) et/ou les parties latérales (3a, 3b).

7. Système de cadre quadrangulaire (1) selon l'une des revendications 1 à 6, **caractérisé en ce que** les languettes (4) d'une partie latérale (3a, 3b) sont formées d'une seule pièce avec celle-ci, en particulier monolithiques.

8. Système de cadre quadrangulaire (1) selon l'une des revendications 1 à 7, **caractérisé en ce que** le système de cadre quadrangulaire (1) comporte une plaque inférieure (11) ou une plaque de refroidissement.

9. Module de batterie (20), comportant un système de cadre quadrangulaire (1) et au moins un élément de batterie (21), qui est englobé par le système de cadre quadrangulaire (1), **caractérisé en ce que** le système de cadre quadrangulaire (1) est conçu selon au moins l'une des revendications 1 à 8.
